# EUROPEAN PATENT SPECIFICATION

(11) **EP 3 226 085 B1**
(45) Date of publication and mention of the grant of the patent: **13.03.2019**
(21) Application number: 14909329.6
(22) Date of filing: 29.12.2014
(51) Int. Cl.: G04G 13/02, H04M 1/21

(54) **ALARM CLOCK SETTING METHOD, ELECTRONIC TERMINAL AND SYSTEM**
WECKERUHREINSTELLVERFAHREN, ELEKTRONISCHES ENDGERÄT UND SYSTEM
PROCÉDÉ DE RÉGLAGE D'HORLOGE D'ALARME, TERMINAL ÉLECTRONIQUE ET SYSTÈME

(43) Date of publication of application: 04.10.2017
(73) Proprietor: Huawei Technologies Co., Ltd., Longgang District Shenzhen, Guangdong 518129 (CN)
(72) Inventor: LIU, Xiaofeng, Shenzhen Guangdong 518129 (CN); GE, Lisha, Shenzhen Guangdong 518129 (CN)
(74) Representative: Gill Jennings & Every LLP
(86) International application number: PCT/CN2014/095382
(87) International publication number: WO 2016/106517

(56) References cited:
- CN-A- 101 102 567
- CN-A- 102 187 285
- CN-A- 102 821 207
- DE-U1-202009 001 507
- JP-A- 2009 276 220

## Description

### TECHNICAL FIELD

The present invention relates to the field of electronic technologies, and in particular, to a method for setting an alarm clock, an electronic terminal, and a system.

### BACKGROUND

Many existing electronic terminals such as mobile phones and personal digital assistants (PDA) have a function of providing time and date. On the basis of time and date, many electronic terminals also provide alarm clock functions, so that users set time to achieve an objective of event reminding.

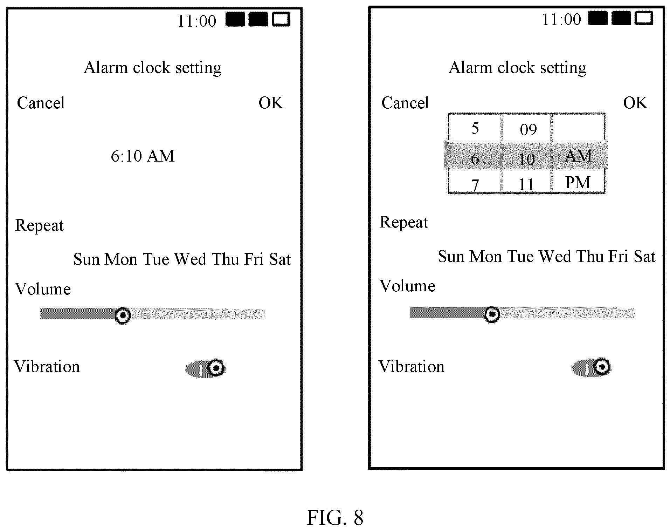

Currently, a manner of implementing an alarm clock in an electronic terminal is mainly that any quantity of alarm clocks and an alarm clock of any alarm time may be set according to a user's requirement (referring to FIG. 8). At a preset alarm time, an alarm clock rings to remind the user. After the user confirms cancellation of the alarm clock, the alarm clock is disabled.

JP2009276220A discloses an alarm generator with a setting of repeated alarms automatically revised according to a particular situation.

However, currently these alarm clock wake-up manners lack flexibility, and cannot provide an intelligent and personalized alarm clock wake-up manner to users.

### SUMMARY

In view of this, embodiments of the present invention provide a method for setting an alarm clock, an electronic terminal, and a system, so as to increase flexibility of an alarm clock wake-up manner.

To achieve the foregoing objective, the following technical solutions are used in the embodiments of the present invention:
According to a first aspect, a method of implementing an alarm clock is provided, including: obtaining a use end time of an electronic terminal; obtaining an alarm time of the electronic terminal; determining a time difference from the use end time to the alarm time; and determining an alarm manner of the electronic terminal according to the time difference.

In a first possible implementation method of the first aspect, the obtaining a use end time of an electronic terminal specifically includes: after the electronic terminal enters a determining time, obtaining the use end time of the electronic terminal.

With reference to the first aspect or the first possible implementation method of the first aspect, in a second possible implementation method, the obtaining a use end time of an electronic terminal specifically includes: when a use time is greater than a preset time value, obtaining the use end time of the electronic terminal.

In a third possible implementation method of the first aspect, the obtaining an alarm time of the electronic terminal specifically includes: the alarm time is an alarm time of an alarm clock that is selected by a user.

In a fourth possible implementation method of the first aspect, the determining an alarm manner of the electronic terminal according to the time difference specifically includes: when the time difference is less than a first threshold, determining that the electronic terminal uses the first alarm manner.

With reference to the first aspect or the fourth possible implementation method of the first aspect, in a fifth possible implementation method, the determining an alarm manner of the electronic terminal according to the time difference specifically includes: when the time difference is greater than the first threshold, determining that the electronic terminal uses a second alarm manner.

In a sixth possible implementation method of the first aspect, the method further includes: when the time difference is greater than a second threshold, clearing the obtained use end time of the electronic terminal, and/or, determining that the alarm manner of the electronic terminal is a regular alarm manner.

In a seventh possible implementation method of the first aspect, the method further includes: when the alarm time passes in the electronic terminal, clearing the obtained use end time of the electronic terminal, and/or, determining that the alarm manner of the electronic terminal is a regular alarm manner.

According to a second aspect, an electronic terminal is provided, where the electronic terminal includes: a first obtaining unit, configured to obtain a use end time of the electronic terminal; a second obtaining unit, configured to obtain an alarm time of the electronic terminal; a first determining unit, configured to determine a time difference from the use end time to the alarm time; and a second determining unit, configured to determine an alarm manner of the electronic terminal according to the time difference.

In a first possible implementation method of the second aspect, the first obtaining unit is configured to obtain the use end time of the electronic terminal after the electronic terminal enters a determining time.

In a second possible implementation method of the second aspect, the first obtaining unit is configured to obtain the use end time of the electronic terminal when a use time is greater than a preset time value.

In a third possible implementation method of the second aspect, the second obtaining unit is configured to obtain the alarm time of the electronic terminal, and the alarm time is an alarm time of an alarm clock that is selected by a user.

In a fourth possible implementation method of the second aspect, the second determining unit further includes a first subunit, configured to determine that the electronic terminal uses a first alarm manner when the time difference is less than a first threshold.

In a fifth possible implementation method of the second aspect, the second determining unit further includes a second subunit, configured to determine that the electronic terminal uses a second alarm manner when the time difference is greater than a first threshold.

In a sixth possible implementation method of the second aspect, the electronic terminal further includes a first clearing unit, configured to: when the time difference is greater than a second threshold, clear the obtained use end time of the electronic terminal, or, determine that the alarm manner of the electronic terminal is a regular alarm manner.

In a seventh possible implementation method of the second aspect, the electronic terminal further includes a second clearing unit, configured to: when the alarm time passes in the electronic terminal, clear the obtained use end time of the electronic terminal, or, determine that the alarm manner of the electronic terminal is a regular alarm manner.

According to a third aspect, an alarm clock system is provided, where the system includes: a first electronic terminal and a second electronic terminal, where the first electronic terminal includes: a first obtaining unit, configured to obtain a use end time of the first electronic terminal, and a first sending unit, configured to send the use end time of the first electronic terminal to the second electronic terminal; and the second electronic terminal includes: a first receiving unit, configured to receive the use end time of the first electronic terminal, a second obtaining unit, configured to obtain an alarm time of the second electronic terminal, a first determining unit, configured to determine a time difference from the use end time to the alarm time, and a second determining unit, configured to determine an alarm manner of the second electronic terminal according to the time difference.

By means of the method for setting an alarm clock and the electronic terminal provided in the embodiments of the present invention, before an alarm clock rings, a time when the terminal is used for a last time is first obtained, and if a time difference from the time when the terminal is used for the last time to a time of the alarm clock is greater than a threshold, flexibility of an implementation manner of an alarm clock can be increased.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for setting an alarm clock according to an embodiment of the present invention;
FIG. 2 is a schematic flowchart of a method for setting an alarm clock according to an embodiment of the present invention;
FIG. 3 is a schematic structural diagram of an electronic terminal according to an embodiment of the present invention;
FIG. 4 is a schematic structural diagram of a second determining unit according to an embodiment of the present invention;
FIG. 5 is a schematic structural diagram of an electronic terminal according to an embodiment of the present invention;
FIG. 6 is a schematic structural diagram of an alarm clock system according to an embodiment of the present invention;
FIG. 7 is a schematic structural diagram of an electronic terminal according to an embodiment of the present invention;
FIG. 8 is an alarm clock setting interface in an electronic terminal in the prior art; and
FIG. 9 is an alarm clock setting interface in an electronic terminal according to an embodiment of the present invention.

### DESCRIPTION OF EMBODIMENTS

The following clearly describes the technical solutions in the embodiments of the present invention with reference to the accompanying drawings in the embodiments of the present invention. It should be understood that, the described embodiments are merely some but not all of the embodiments of the present invention. All other embodiments obtained by a person of ordinary skill in the art based on the embodiments of the present invention without creative efforts shall fall within the protection scope of the present invention.

The following description and drawings use an example in which an alarm clock is applied to an electronic terminal such as a mobile phone, a smartphone, a wearable device, an e-reader, or a personal digital assistant PDA. It may be understood that the electronic terminal is not limited to the content listed in the foregoing.

An electronic terminal may include a control circuit such as a processor and a memory, and may specifically include a hard disk, a nonvolatile memory, a volatile memory, and the like. A control circuit may be based on one or more microprocessors, microcontrollers, digital signal processors, baseband processors, audio codec chips, application-specific integrated circuits, power supply management units, or the like. An electronic terminal further includes a timer, an audio output device, a vibrator, and the like.

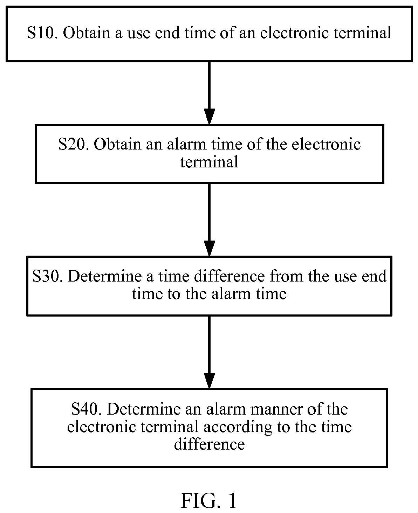

FIG. 1 shows a method for setting an alarm clock according to Embodiment 1 of the present invention. The method for setting an alarm clock includes the following steps.

S10: Obtain a use end time of an electronic terminal.

The use end time is used to indirectly reflect a time when a user stops using the electronic terminal. Although a time when the user actually stops using the electronic terminal is difficult to determine, the use end time of the electronic terminal may be used to infer the time when the user stops using the electronic terminal. The use end time of an electronic terminal may be a time when the electronic terminal enters a standby state, or may be a time when a screen of the electronic terminal with a display is turned off, or a time when the electronic terminal enters a lock screen, or may further be a time when the electronic terminal detects that the user closes a protective case if the electronic terminal has the protective case.

A mobile phone is used as an example. When the user keeps using the mobile phone, the mobile phone stays in a use state. When the user presses a power off button, or the user does not perform any operation for a long time, the mobile phone enters a standby state according to a setting of the mobile phone.

The obtained use end time of the electronic terminal may be stored in a memory, and a processor invokes stored code to obtain the stored use end time of the electronic terminal. The method is known by persons of ordinary skill in the art, and details are not described herein again.

S20: Obtain an alarm time of the electronic terminal.

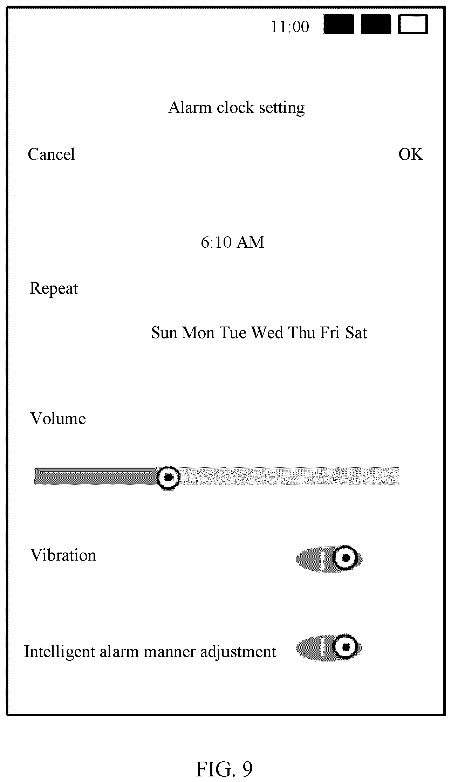

The alarm time may be preset by a user. As shown in FIG. 8 and FIG. 9, the electronic terminal includes a display screen, content of alarm clock settings is included on the display screen. A user may determine an alarm time of the electronic terminal by entering a time value or dragging a slider on a time scrollbar. The alarm time may be one or more.

An alarm time may be stored in a memory, and a processor calls stored code to obtain the stored alarm time. The method is known by persons of ordinary skill in the art, and details are not described herein again.

It should be noted that step S10 and step S20 are not arranged in a specific order.

S30: Determine a time difference from the use end time to the alarm time.

The time difference may be obtained according to the obtained use end time and the obtained alarm time. For example, the use end time of the electronic terminal is 10:00 p.m., and the alarm time is 6:00 a.m. In this case, the time difference from the use end time to the alarm time is eight hours. In this embodiment of the present invention, the method for determining the time difference from the use end time to the alarm time may be implemented invoking a preset piece of code by a processor.

S40: Determine an alarm manner of the electronic terminal according to the time difference.

The alarm manner includes any one or a combination of a ringing volume, alarm duration, a quantity of times that an alarm repeats, a ringtone type, and whether vibration is enabled.

In the prior art, after a user sets a wake-up alarm clock with an alarm time of 6:30 a.m., and set a volume of the alarm clock to "medium", the alarm clock wakes up the user with the volume at 6:30 every morning, which lacks flexibility. For example, sometimes the user goes to bed at 2:00 a.m., and goes into deep sleep at 6:30 a.m. Therefore, it may be difficult to wake up the user with the medium volume. Sometimes the user goes to bed at 9:00 p.m., and in the next morning, the medium volume is too loud, producing noisy. In this case, this embodiment of the present invention provides a method, so that an electronic terminal can determine that the electronic terminal uses different alarm manners according to a time difference from a use end time to an alarm time, which increases flexibility of an alarm manner of an alarm clock.

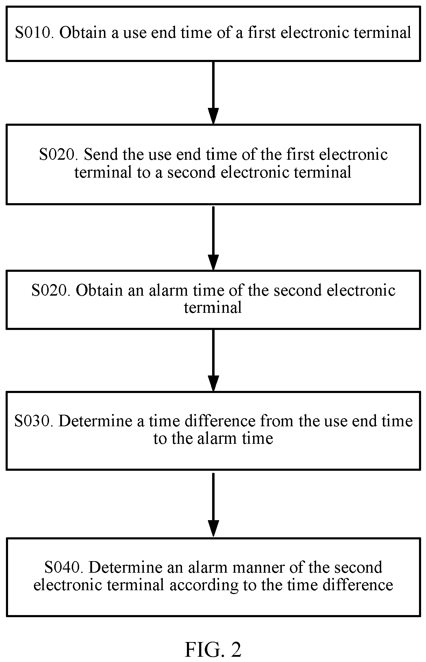

To further increase flexibility of alarm clock wake-up, FIG. 2 shows a method for setting an alarm clock for multiple terminals according to this embodiment of the present invention, so that determining a use end time of a user and executing alarm clock wake-up are separately performed on different subjects. The method specifically includes the following steps.

S010: Obtain a use end time of a first electronic terminal.

In a specific embodiment, reference may be made to the foregoing step S10 for the step of obtaining a use end time of an electronic terminal, and details are not described herein again.

S011: Send the use end time of the first electronic terminal to a second electronic terminal.

The first electronic terminal may be a mobile phone, a Pad, a wearable device, or any other electronic terminal. The second electronic terminal may be a mobile phone, a Pad, a wearable device, or any other electronic terminal. The first electronic terminal and the second electronic terminal may be of a same type, or may be of different types, which is not limited in this embodiment of the present invention.

The sending method in step S011 includes a data transmission method that uses Bluetooth, Wi-Fi, data traffic or any other manner. Correspondingly, the second electronic terminal can receive the use end time of the first electronic terminal.

S020: Obtain an alarm time of the second electronic terminal.

The second electronic terminal obtains an alarm time of the second electronic terminal. Reference may be made to the forgoing step S20 for the step of obtaining an alarm time of the second electronic terminal, and details are not described herein again.

S030: Determine a time difference from the use end time to the alarm time.

Reference may be made to the foregoing step S30 for step S030, and details are not described herein again.

S040: Determine an alarm manner of the second electronic terminal according to the time difference.

Reference may be made to the foregoing step S40 for step S040, and details are not described herein again.

By means of the method provided in this embodiment of the present invention, an electronic device of which a use end time of a user is determined may be different from an electronic device that wakes up the user. The second electronic terminal may determine different alarm manners of the second electronic terminal according to a time difference from the use end time of the first electronic terminal to the alarm time of the second electronic terminal, thereby further increasing flexibility of alarm clock wake-up.

An embodiment of the present invention further provides a method for setting an alarm clock. The method for setting an alarm clock includes the following steps.

S101: Obtain a use end time of an electronic terminal.

The step specifically includes: obtaining the use end time of the electronic terminal after the electronic terminal enters a determining time.

The determining time refers to a preset time of the electronic terminal. A user may frequently use the electronic terminal. If every time after the use end time of the electronic terminal is obtained, the use end time needs to be compared with an alarm time, and a time difference between the use end time and the alarm time needs to be calculated to determine an alarm manner, power consumption of the electronic terminal is increased. Therefore, in this embodiment of the present invention, the electronic terminal first determines whether the electronic terminal enters a determining time. If the electronic terminal enters the determining time, the electronic terminal obtains a use end time of the electronic terminal, thereby reducing power consumption. Specifically, the electronic terminal may determine, by using a built-in timer, whether the electronic terminal enters the determining time.

The determining time may be set by the user, or may be preset in a system. The determining time may be set to a relative value related to the alarm time. For example, the alarm time is 6:00 am, and the determining time is set to a time that is 5 minutes earlier than the alarm time, and then the electronic terminal starts at 5:55 to obtain a most recent use end time of the electronic terminal that is stored in a memory.

Optionally, on a user interface of the electronic terminal, an option of setting a determining time is provided, so that the user may set the determining time by entering a time value, dragging a slider on a time scrollbar, or other manners.

To improve accuracy of the obtained use end time, optionally, when a use time is greater than a preset time value, the use end time of the electronic terminal is obtained.

The use time refers to duration of using the electronic terminal by the user. The use time may be a power-on time, a time when a screen is turned on, or a time that an application program runs, which is not limited in this embodiment of the present invention.

In the foregoing embodiment, every time after the electronic terminal is used, a use end time of the electronic terminal needs to be obtained, which may consume power of the electronic terminal, and may result in that the electronic terminal falsely performs determining. For example, an alarm time of an alarm clock is 6:00 a.m., and a user turns off a mobile phone after finishing watching a movie at 10:00 p.m. and goes to bed, and then a use end time obtained by the mobile phone is 10:00 p.m. However, the user may suddenly wake up at 2:00 a.m. and look at a time on the mobile phone, and then turn off the mobile phone. In this case, a time of using the mobile phone by the user at the latter time is only a few seconds. In this case, if the mobile phone obtains the use end time of the latter time, an alarm manner is changed, and a sleep time of the user may be falsely determined. To overcome these problems, before obtaining the use end time of the electronic terminal, whether a use time of the electronic terminal device at a current time is greater than a preset time value is determined first, and the use end time is obtained only when a condition is met. The preset time value may be set to 5 minutes, 10 minutes, or the like, which is not limited in this embodiment of the present invention. Specifically, the electronic terminal may calculate the use time of the electronic terminal by using a built-in timer, and determine whether the use time is greater than the preset time value by using a processor or other circuits having a determining function.

In a specific embodiment, refer to the foregoing step S10 for the step of obtaining a use end time of an electronic terminal, and details are not described herein again.

S201: Obtain an alarm time of the electronic terminal.

The step specifically includes: the alarm time refers to an alarm time of an alarm clock that is selected by a user.

It may be understood that, a user may set multiple alarm clocks, but an alarm manner does not need to be adjusted for every alarm clock according to this embodiment of the present invention. For example, the user sets two alarm clocks. One is a wake-up alarm clock, and the other is an alarm clock for a meeting. In this case, the solution provided in this embodiment of the present invention may need to be used for only the wake-up alarm clock. Therefore, the electronic terminal may provide an option on a user interface of the electronic terminal for selection by the user. For example, on an interface shown in FIG. 9, an option box is provided. After a user selects "alarm manner intelligent adjustment", the electronic terminal uses the method provided in this embodiment of the present invention to determine an alarm manner of the alarm clock. For an alarm clock that is not selected, the solution in the prior art is still used. Therefore, flexibility of the solution is further improved.

S301: Determine a time difference from the use end time to the alarm time.

In a specific embodiment, reference may be made to the foregoing step S30 for step S301, and details are not described herein again.

S401: Determine an alarm manner of the electronic terminal according to the time difference.

Optionally, step 401 includes: when the time difference is less than a first threshold, determining that the electronic terminal uses a first alarm manner; and when the time difference is greater than the first threshold, determining that the electronic terminal uses a second alarm manner.

Optionally, a volume of the first alarm manner is greater than a volume of the second alarm manner.

Optionally, music of the first alarm manner is different from music of the second alarm manner.

Optionally, the first alarm manner includes vibration, and the second alarm manner does not include vibration.

It may be understood that the foregoing first alarm manner and second alarm manner may be combined or divided, so as to diversify alarm manners.

It should be noted that, in the foregoing solution, "greater than" includes a case of "greater than or greater than or equal to", and "less than" includes a case of "less than or less than or equal to".

Further, when the time difference is greater than a second threshold, the obtained use end time of the electronic terminal is cleared, and/or, the alarm manner of the electronic terminal is determined to be a regular alarm manner.

Optionally, when an alarm time passes in the electronic terminal, the obtained use end time of the electronic terminal is cleared, and/or, the alarm manner of the electronic terminal is determined to be a regular alarm manner.

The regular alarm manner may be any one of the foregoing first alarm manner and second alarm manner, or may be another alarm manner. The regular alarm manner includes any one or a combination of a ringing volume, a ringtone type, whether vibration is enabled, and the like.

It may be understood that, after an alarm time passes in the terminal, the obtained use end time of the terminal no longer has reference significance. Therefore, when an alarm time passes in the electronic terminal, the obtained use end time of the electronic terminal may be cleared, and/or, the alarm manner of the electronic terminal may be determined to be a regular alarm manner.

In addition, when the time difference from the use end time of the electronic terminal to the alarm time is excessively large, for example, over 24 hours, the use end time has little reference significance. Therefore, the second threshold may be set to 12 hours or 24 hours, which is not limited in this embodiment of the present invention. When the time difference is greater than the second threshold, the obtained use end time of the electronic terminal is cleared, and/or, the alarm manner of the electronic terminal is determined to be a regular alarm manner.

It may be understood that the method in this embodiment of the present invention may be applied to a scenario in which multiple electronic terminals are involved.

By means of the manner of implementing an alarm clock provided in this embodiment of the present invention, different alarm manners of an alarm clock may be determined according to an obtained time difference from a use end time to an alarm time, which increases flexibility of an alarm manner.

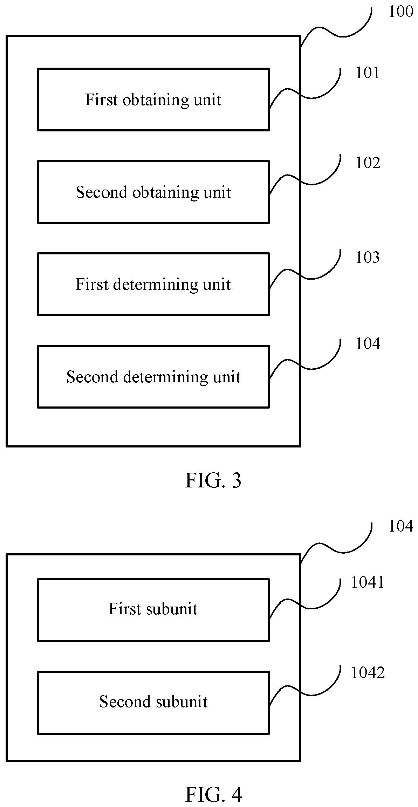

An embodiment of the present invention further provides an electronic terminal, as shown in FIG. 3.

The electronic terminal 100 includes:
a first obtaining unit 101, configured to obtain a use end time of the electronic terminal;
a second obtaining unit 102, configured to obtain an alarm time of the electronic terminal;
a first determining unit 103, configured to determine a time difference from the use end time to the alarm time; and
a second determining unit 104, configured to determine an alarm manner of the electronic terminal according to the time difference.

By means of the electronic terminal of an alarm clock provided in this embodiment of the present invention, different alarm manners of an alarm clock may be determined according to an obtained time difference from a use end time of the electronic terminal to an alarm time, which increases flexibility of an alarm manner.

Optionally, the first obtaining unit 101 is further configured to obtain the use end time of the electronic terminal after the electronic terminal enters a determining time.

Optionally, the first obtaining unit 101 is configured to obtain the use end time of the electronic terminal when a use time is greater than a preset time value.

Optionally, the second obtaining unit 102 is configured to obtain the alarm time of the electronic terminal, where the alarm time refers to an alarm time of an alarm clock that is selected by a user.

Referring to FIG. 4, optionally, the second determining unit 104 further includes a first subunit 1041, configured to determine that the electronic terminal uses a first alarm manner when the time difference is less than a first threshold.

Optionally, the second determining unit 104 further includes a second subunit 1042, configured to determine that the electronic terminal uses a second alarm manner when the time difference is greater than a first threshold.

Optionally, a volume of the first alarm manner is greater than a volume of the second alarm manner.

Optionally, music of the first alarm manner is different from music of the second alarm manner.

Optionally, the first alarm manner includes vibration, and the second alarm manner does not include vibration.

It should be noted that, in the foregoing solution, "greater than" includes a case of "greater than or greater than or equal to", and "less than" includes a case of "less than or less than or equal to".

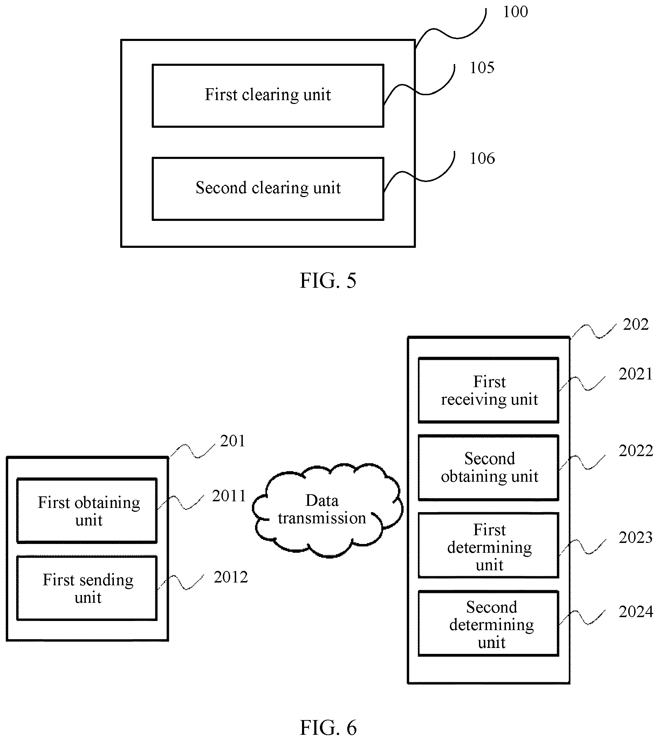

Referring to FIG. 5, optionally, the electronic terminal 100 further includes a first clearing unit 105, configured to: when the time difference is greater than a second threshold, clear the obtained use end time of the electronic terminal, or, determine that the alarm manner of the electronic terminal is a regular alarm manner.

Optionally, the electronic terminal further includes a second clearing unit 106, configured to: when the alarm time passes in the electronic terminal, clear the obtained use end time of the electronic terminal, or, determine that the alarm manner of the electronic terminal is a regular alarm manner.

It should be noted that, reference may be made to the forgoing method embodiment for detailed description of functions of units in the foregoing electronic terminal that are not described in detail, and details are not described herein again.

By means of the electronic terminal provided in this embodiment of the present invention, different alarm manners of an alarm clock may be determined according to an obtained time difference from a use end time of the electronic terminal to an alarm time, which increases flexibility of an alarm manner.

An embodiment of the present invention further provides an alarm clock system. Referring to FIG. 6, the system includes: a first electronic terminal 201 and a second electronic terminal 202.

The first electronic terminal 201 includes: a first obtaining unit 2011, configured to obtain a use end time of the first electronic terminal; and
a first sending unit 2012, configured to send the use end time of the first electronic terminal to the second electronic terminal.

The second electronic terminal 202 includes: a first receiving unit 2021, configured to receive the use end time of the first electronic terminal;
a second obtaining unit 2022, configured to obtain an alarm time of the second electronic terminal;
a first determining unit 2023, configured to determine a time difference from the use end time to the alarm time; and
a second determining unit 2024, configured to determine an alarm manner of the second electronic terminal according to the time difference.

Data transmission between the first electronic terminal 201 and the second electronic terminal 202 may be implemented by using a wireless communication manner such as Wi-Fi, Bluetooth or data traffic.

It should be noted that, reference may be made to the forgoing method and apparatus embodiments for detailed description of functions of terminals and units in the foregoing alarm clock system that are not described in detail, and details are not described herein again.

By means of the alarm clock system provided in this embodiment of the present invention, different alarm manners of an alarm clock may be determined according to an obtained time difference from a use end time of the first electronic terminal to an alarm time of the second electronic terminal, which increases flexibility of an alarm manner.

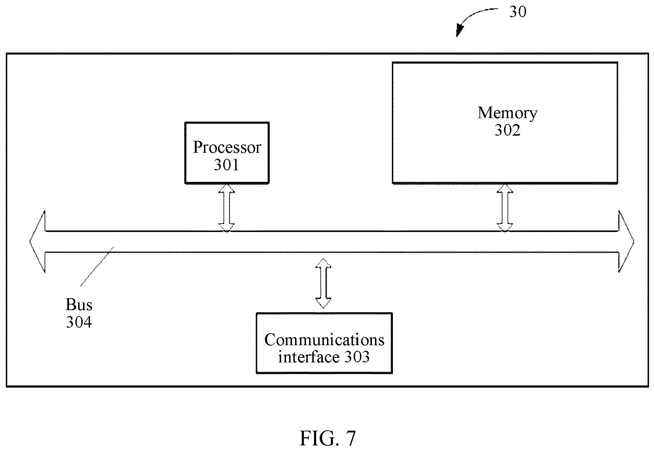

FIG. 7 shows another embodiment of an electronic terminal provided in the present invention. The electronic terminal 30 provided in this embodiment includes a processor 301, a memory 302, a communications interface 303, and a bus 304. The processor 301, the memory 302, and the communications interface 303 are connected to and communicate with each other by using the bus 304. The bus 304 may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus 304 may include an address bus, a data bus, a control bus, and the like. For ease of representation, the bus 304 in FIG. 7 is represented by using only one bold line, but it does not indicate that there is only one bus or only one type of bus. Where:
The memory 302 is configured to store executable program code, where the program code includes a computer operation instruction. The memory 302 may include a high-speed RAM memory, and may further include a non-volatile memory (non-volatile memory), for example, at least one magnetic disk memory.

The processor 301 reads executable program code stored in the memory 302 to run a program corresponding to the executable program code, so as to: obtain a use end time of the electronic terminal; obtain an alarm time of the electronic terminal; determine a time difference from the use end time to the alarm time; and determine an alarm manner of the electronic terminal according to the time difference.

The processor 301 may be a central processing unit (Central Processing Unit, CPU for short), or an application specific integrated circuit (Application Specific Integrated Circuit, ASIC for short), or may be configured into one or more integrated circuits for implementing the embodiments of the present invention.

It should be noted that the processor 301 not only has the foregoing functions, but also can be configured to perform other procedures in the foregoing method embodiments, and details are not described herein again.

It should be further noted that reference may be made to the foregoing embodiment of the electronic terminal for division of functional units in the processor 301, and details are not described herein again.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method of implementing an alarm clock, wherein the method is applied to an electronic terminal, comprising:
obtaining a use end time of the electronic terminal;
obtaining an alarm time of the electronic terminal;
determining a time difference from the use end time to the alarm time; and
determining an alarm manner of the electronic terminal according to the time difference.

2. The method according to claim 1, wherein the obtaining a use end time of the electronic terminal specifically comprises:
obtaining the use end time of the electronic terminal after the electronic terminal enters a determining time.

3. The method according to claim 1 or 2, wherein the obtaining a use end time of the electronic terminal specifically comprises:
obtaining the use end time of the electronic terminal when a use time is greater than a preset time value.

4. The method according to claim 1, wherein the obtaining an alarm time of the electronic terminal specifically comprises:
the alarm time is an alarm time of an alarm clock that is selected by a user.

5. The method according to claim 1, wherein the determining an alarm manner of the electronic terminal according to the time difference specifically comprises:
determining that the electronic terminal uses a first alarm manner when the time difference is less than a first threshold.

6. The method according to claim 5, wherein the determining an alarm manner of the electronic terminal according to the time difference specifically comprises:
determining that the electronic terminal uses a second alarm manner when the time difference is greater than the first threshold.

7. The method according to claim 1, wherein the method further comprises:
when the time difference is greater than a second threshold, clearing the obtained use end time of the electronic terminal, and/or, determining that the alarm manner of the electronic terminal is a regular alarm manner.

8. The method according to claim 1, wherein the method further comprises:
when the alarm time passes in the electronic terminal, clearing the obtained use end time of the electronic terminal, and/or, determining that the alarm manner of the electronic terminal is a regular alarm manner.

9. An electronic terminal, wherein the electronic terminal comprises:
a first obtaining unit, configured to obtain a use end time of the electronic terminal;
a second obtaining unit, configured to obtain an alarm time of the electronic terminal;
a first determining unit, configured to determine a time difference from the use end time to the alarm time; and
a second determining unit, configured to determine an alarm manner of the electronic terminal according to the time difference.

10. The electronic terminal according to claim 9, wherein
the first obtaining unit is configured to obtain the use end time of the electronic terminal after the electronic terminal enters a determining time.

11. The electronic terminal according to claim 9, wherein
the first obtaining unit is configured to obtain the use end time of the electronic terminal when a use time is greater than a preset time value.

12. The electronic terminal according to claim 9, wherein the second obtaining unit is configured to obtain the alarm time of the electronic terminal, and the alarm time is an alarm time of an alarm clock that is selected by a user.

13. The electronic terminal according to claim 9, wherein the second determining unit further comprises a first subunit, configured to determine that the electronic terminal uses a first alarm manner when the time difference is less than a first threshold.

14. The electronic terminal according to claim 9, wherein the second determining unit further comprises a second subunit, configured to determine that the electronic terminal uses a second alarm manner when the time difference is greater than a first threshold.

15. An alarm clock system, wherein the system comprises: a first electronic terminal and a second electronic terminal, wherein
the first electronic terminal comprises: a first obtaining unit, configured to obtain a use end time of the first electronic terminal; and
a first sending unit, configured to send the use end time of the first electronic terminal to the second electronic terminal; and
the second electronic terminal comprises: a first receiving unit, configured to receive the use end time of the electronic terminal;
a second obtaining unit, configured to obtain an alarm time of the second electronic terminal;
a first determining unit, configured to determine a time difference from the use end time to the alarm time; and
a second determining unit, configured to determine an alarm manner of the second electronic terminal according to the time difference.

## Patentansprüche

1. Verfahren zum Implementieren einer Weckeruhr, wobei das Verfahren auf einem elektronischen Endgerät angewandt wird, umfassend:
Erhalten einer Einsatz-Endzeit des elektronischen Endgeräts;
Erhalten einer Alarmzeit des elektronischen Endgeräts;
Ermitteln einer Zeitdifferenz von der Einsatz-Endzeit zur Alarmzeit; und
Festlegen einer Alarmweise des elektronischen Endgeräts entsprechend der Zeitdifferenz.

2. Verfahren nach Anspruch 1, wobei das Erhalten einer Einsatz-Endzeit des elektronischen Endgeräts im Einzelnen umfasst:
Erhalten der Einsatz-Endzeit des elektronischen Endgeräts, nachdem das elektronische Endgerät in eine Bestimmungszeit eingetreten ist.

3. Verfahren nach Anspruch 1 oder 2, wobei das Erhalten einer Einsatz-Endzeit des elektronischen Endgeräts im Einzelnen umfasst:
Erhalten der Einsatz-Endzeit des elektronischen Endgeräts, wenn eine Einsatzzeit größer ist als ein vorgegebener Zeitwert.

4. Verfahren nach Anspruch 1, wobei das Erhalten einer Alarmzeit des elektronischen Endgeräts im Einzelnen umfasst:
die Alarmzeit ist eine Alarmzeit einer Weckeruhr, die durch einen Benutzer ausgewählt wird.

5. Verfahren nach Anspruch 1, wobei das Festlegen einer Alarmweise des elektronischen Endgeräts entsprechend der Zeitdifferenz im Einzelnen umfasst:
Festlegen, dass das elektronische Endgerät eine erste Alarmweise verwendet, wenn die Zeitdifferenz geringer als ein erster Schwellenwert ist.

6. Verfahren nach Anspruch 5, wobei das Festlegen einer Alarmweise des elektronischen Endgeräts entsprechend der Zeitdifferenz im Einzelnen umfasst:
Festlegen, dass das elektronische Endgerät eine zweite Alarmweise verwendet, wenn die Zeitdifferenz größer als der erste Schwellenwert ist.

7. Verfahren nach Anspruch 1, wobei das Verfahren ferner umfasst:
wenn die Zeitdifferenz größer als ein zweiter Schwellenwert ist, Löschen der erhaltenen Einsatz-Endzeit des elektronischen Endgeräts und/oder Festlegen, dass die Alarmweise des elektronischen Endgeräts eine reguläre Alarmweise ist.

8. Verfahren nach Anspruch 1, wobei das Verfahren ferner umfasst:
wenn die Alarmzeit im elektronischen Endgerät verstreicht, Löschen der erhaltenen Einsatz-Endzeit des elektronischen Endgeräts und/oder Festlegen, dass die Alarmweise des elektronischen Endgeräts eine reguläre Alarmweise ist.

9. Elektronisches Endgerät, wobei das elektronische Endgerät umfasst:
eine erste Erhalteinheit, ausgelegt zum Erhalten einer Einsatz-Endzeit des elektronischen Endgeräts;
eine zweite Erhalteinheit, ausgelegt zum Erhalten einer Alarmzeit des elektronischen Endgeräts;
eine erste Bestimmungseinheit, ausgelegt zum Bestimmen einer Zeitdifferenz von der Einsatz-Endzeit zur Alarmzeit; und
eine zweite Bestimmungseinheit, ausgelegt zum Bestimmen einer Alarmweise des elektronischen Endgeräts entsprechend der Zeitdifferenz.

10. Elektronisches Endgerät nach Anspruch 9, wobei
die erste Erhalteinheit ausgelegt ist zum Erhalten der Einsatz-Endzeit des elektronischen Endgeräts, nachdem das elektronische Endgerät in eine Bestimmungszeit eingetreten ist.

11. Elektronisches Endgerät nach Anspruch 9, wobei
die erste Erhalteinheit ausgelegt ist zum Erhalten der Einsatz-Endzeit des elektronischen Endgeräts, wenn eine Einsatzzeit größer als ein vorgegebener Zeitwert ist.

12. Elektronisches Endgerät nach Anspruch 9, wobei die zweite Erhalteinheit ausgelegt ist zum Erhalten der Alarmzeit des elektronischen Endgeräts und die Alarmzeit eine Alarmzeit einer Weckeruhr ist, die von einem Benutzer ausgewählt wird.

13. Elektronisches Endgerät nach Anspruch 9, wobei die zweite Bestimmungseinheit ferner eine erste Untereinheit umfasst, ausgelegt zum Festlegen, dass das elektronische Endgerät eine erste Alarmweise verwendet, wenn die Zeitdifferenz geringer als ein erster Schwellenwert ist.

14. Elektronisches Endgerät nach Anspruch 9, wobei die zweite Bestimmungseinheit ferner eine zweite Untereinheit umfasst, ausgelegt zum Festlegen, dass das elektronische Endgerät eine zweite Alarmweise verwendet, wenn die Zeitdifferenz größer als ein erster Schwellenwert ist.

15. Weckeruhrsystem, wobei das System umfasst: ein erstes elektronisches Endgerät und ein zweites elektronisches Endgerät, wobei
das erste elektronische Endgerät umfasst: eine erste Erhalteinheit, ausgelegt zum Erhalten einer Einsatz-Endzeit des ersten elektronischen Endgeräts; und
eine erste Sendeeinheit, ausgelegt zum Senden der Einsatz-Endzeit des ersten elektronischen Endgeräts zum zweiten elektronischen Endgerät; und
das zweite elektronische Endgerät umfasst: eine erste Empfangseinheit, ausgelegt zum Empfangen der Einsatz-Endzeit des elektronischen Endgeräts;
eine zweite Erhalteinheit, ausgelegt zum Erhalten einer Alarmzeit des zweiten elektronischen Endgeräts;
eine erste Bestimmungseinheit, ausgelegt zum Bestimmen einer Zeitdifferenz von der Einsatz-Endzeit zur Alarmzeit; und
eine zweite Bestimmungseinheit, ausgelegt zum Bestimmen einer Alarmweise des zweiten elektronischen Endgeräts entsprechend der Zeitdifferenz.

## Revendications

1. Procédé de mise en oeuvre d'une horloge d'alarme, le procédé étant appliqué à un terminal électronique et comprenant les étapes consistant à :
obtenir une heure de fin d'utilisation du terminal électronique ;
obtenir une heure d'alarme du terminal électronique ;
déterminer une différence de temps entre l'heure de fin d'utilisation et l'heure d'alarme ; et
déterminer un mode d'alarme du terminal électronique d'après la différence de temps.

2. Procédé selon la revendication 1, dans lequel l'obtention d'une heure de fin d'utilisation du terminal électronique consiste spécifiquement à :
obtenir l'heure de fin d'utilisation du terminal électronique après que le terminal électronique est entré dans un temps de détermination.

3. Procédé selon la revendication 1 ou 2, dans lequel l'obtention d'une heure de fin d'utilisation du terminal électronique consiste spécifiquement à :
obtenir l'heure de fin d'utilisation du terminal électronique lorsqu'un temps d'utilisation est supérieur à une valeur de temps prédéfinie.

4. Procédé selon la revendication 1, dans lequel l'obtention d'une heure d'alarme du terminal électronique comprend spécifiquement :
le fait que l'heure d'alarme est une heure d'alarme d'une horloge d'alarme qui est choisie par un utilisateur.

5. Procédé selon la revendication 1, dans lequel la détermination d'un mode d'alarme du terminal électronique d'après la différence de temps consiste spécifiquement à :
déterminer que le terminal électronique utilise un premier mode d'alarme lorsque la différence de temps est inférieure à un premier seuil.

6. Procédé selon la revendication 5, dans lequel la détermination d'un mode d'alarme du terminal électronique d'après la différence de temps consiste spécifiquement à :
déterminer que le terminal électronique utilise un deuxième mode d'alarme lorsque la différence de temps est supérieure au premier seuil.

7. Procédé selon la revendication 1, le procédé comprenant également l'étape consistant à :
lorsque la différence de temps est supérieure à un deuxième seuil, effacer l'heure de fin d'utilisation obtenue pour le terminal électronique et/ou déterminer que le mode d'alarme du terminal électronique est un mode d'alarme normal.

8. Procédé selon la revendication 1, le procédé comprenant également l'étape consistant à :
lorsque l'heure d'alarme est écoulée dans le terminal électronique, effacer l'heure de fin d'utilisation du terminal électronique et/ou déterminer que le mode d'alarme du terminal électronique est un mode d'alarme normal.

9. Terminal électronique, le terminal électronique comprenant :
une première unité d'obtention, configurée pour obtenir une heure de fin d'utilisation du terminal électronique ;
une deuxième unité d'obtention, configurée pour obtenir une heure d'alarme du terminal électronique ;
une première unité de détermination, configurée pour déterminer une différence de temps entre l'heure de fin d'utilisation et l'heure d'alarme ; et
une deuxième unité de détermination, configurée pour déterminer un mode d'alarme du terminal électronique d'après la différence de temps.

10. Terminal électronique selon la revendication 9, dans lequel
la première unité d'obtention est configurée pour obtenir l'heure de fin d'utilisation du terminal électronique après que le terminal électronique est entré dans un temps de détermination.

11. Terminal électronique selon la revendication 9, dans lequel
la première unité d'obtention est configurée pour obtenir l'heure de fin d'utilisation du terminal électronique lorsqu'un temps d'utilisation est supérieur à une valeur de temps prédéfinie.

12. Terminal électronique selon la revendication 9, dans lequel la deuxième unité d'obtention est configurée pour obtenir l'heure d'alarme du terminal électronique, et l'heure d'alarme est une heure d'alarme d'une horloge d'alarme qui est choisie par un utilisateur.

13. Terminal électronique selon la revendication 9, dans lequel la deuxième unité de détermination comprend également une première sous-unité, configurée pour déterminer que le terminal électronique utilise un premier mode d'alarme lorsque la différence de temps est inférieure à un premier seuil.

14. Terminal électronique selon la revendication 9, dans lequel la deuxième unité de détermination comprend également une deuxième sous-unité, configurée pour déterminer que le terminal électronique utilise un deuxième mode d'alarme lorsque la différence de temps est supérieure à un premier seuil.

15. Système d'horloge d'alarme, le système comprenant : un premier terminal électronique et un deuxième terminal électronique, dans lequel système le premier terminal électronique comprend : une première unité d'obtention, configurée pour obtenir une heure de fin d'utilisation du premier terminal électronique ; et
une première unité d'envoi, configurée pour envoyer l'heure de fin d'utilisation du premier terminal électronique au deuxième terminal électronique ; et
le deuxième terminal électronique comprend : une première unité de réception, configurée pour recevoir l'heure de fin d'utilisation du terminal électronique ;
une deuxième unité d'obtention, configurée pour obtenir une heure d'alarme du deuxième terminal électronique ;
une première unité de détermination, configurée pour déterminer une différence de temps entre l'heure de fin d'utilisation et l'heure d'alarme ; et
une deuxième unité de détermination, configurée pour déterminer un mode d'alarme du deuxième terminal électronique d'après la différence de temps.
